# EUROPÄISCHE PATENTANMELDUNG

(11) **EP 4 748 624 A1**
(43) Veröffentlichungstag der Anmeldung: **27.05.2026**
(21) Anmeldenummer: 25213145.3
(22) Anmeldetag: 03.11.2025
(51) Int. Cl.: B60L 50/51

(54) **TRAKTIONSNETZ UND VERFAHREN ZUM BETREIBEN EINES TRAKTIONSNETZES**

(30) Priorität: 20.11.2024 DE 102024134020
(71) Anmelder: Volkswagen Aktiengesellschaft, 38440 Wolfsburg (DE)
(72) Erfinder: Henkenius, Carsten, 38440 Wolfsburg (DE)

(57) **Zusammenfassung**

Die Erfindung betrifft ein Traktionsnetz (1), wobei das Traktionsnetz (1) eine Hochvoltbatterie (2), einen Wechselrichter (3), eine mindestens dreiphasige Elektromaschine (4), mindestens einen Zwischenkreiskondensator (7) und eine Ansteuerschaltung (10) für den Wechselrichter (3) aufweist, wobei der mindestens eine Zwischenkreiskondensator (7) parallel zu einem Gleichspannungseingang des Wechselrichters (3) geschaltet ist, wobei die Elektromaschine (4) einen Sternpunkt (SP) aufweist, wobei der Wechselrichter (3) Schaltelemente mit Freilaufdioden aufweist, wobei eine positive Hochvoltleitung (HV+) mit dem Sternpunkt (SP) der Elektromaschine (4) verbunden ist, wobei die Ansteuerschaltung (10) derart ausgebildet ist, den Wechselrichter (3) als Hochsetzsteller anzusteuern, sowie ein Verfahren.

## Beschreibung

Die Erfindung betrifft ein Traktionsnetz und ein Verfahren zum Betreiben eines Traktionsnetzes.

Traktionsnetze dienen beispielsweise zum Antrieb von Elektrofahrzeugen. Diese weisen typischerweise eine Hochvoltbatterie, einen Wechselrichter und eine Elektromaschine auf. Dabei ist an einem Gleichspannungseingang des Wechselrichters ein Zwischenkreiskondensator angeordnet.

Weiter ist bereits vorgeschlagen worden, zwischen der Hochvoltbatterie und dem Zwischenkreiskondensator einen DC/DC-Wandler anzuordnen, der vorzugsweise als Hochsetzsteller ausgebildet ist. Hierdurch kann der Wechselrichter mit höheren Spannungen als die Batteriespannung arbeiten. Dabei kann der DC/DC-Wandler auch bidirektional ausgebildet sein, sodass im Rekuperationsbetrieb der DC/DC-Wandler als Tiefsetzsteller arbeitet. Eine derartige Schaltungsanordnung erlaubt höhere Freiheitsgrade, da durch den DC/DC-Wandler auch Spannungsschwankungen der Hochvoltbatterie aufgrund unterschiedlicher Ladezustände ausgeglichen werden können. Allerdings sind DC/DC-Wandler in dieser Leistungsklasse relativ groß und schwer.

Der Erfindung liegt das technische Problem zugrunde, ein Traktionsnetz mit großem Freiheitsgrad zu schaffen, wobei der Schaltungsaufwand reduziert wird. Ein weiteres technisches Problem ist die Zurverfügungstellung eines entsprechenden Verfahrens zum Betreiben eines solchen Traktionsnetzes.

Die Lösung des technischen Problems ergibt sich durch ein Traktionsnetz mit den Merkmalen des Anspruchs 1 sowie ein Verfahren mit den Merkmalen des Anspruchs 10. Weitere vorteilhafte Ausgestaltungen der Erfindung ergeben sich aus den Unteransprüchen.

Das Traktionsnetz weist eine Hochvoltbatterie, einen Wechselrichter, eine mindestens dreiphasige Elektromaschine, mindestens einen Zwischenkreiskondensator und eine Ansteuerschaltung für den Wechselrichter auf. Der mindestens eine Zwischenkreiskondensator ist parallel zu einem Gleichspannungseingang des Wechselrichters geschaltet. Die Elektromaschine weist einen Sternpunkt auf. Der Wechselrichter weist Schaltelemente mit Freilaufdioden auf. Dabei ist eine positive Hochvoltleitung mit dem Sternpunkt der Elektromaschine verbunden, wobei die Ansteuerschaltung derart ausgebildet ist, den Wechselrichter als Hochsetzsteller anzusteuern. Hierdurch wird der aus dem Stand der Technik bekannte DC/DC-Wandler in den Wechselrichter integriert. Dabei ist die positive Hochvoltleitung und damit der Sternpunkt der Elektromaschine bei geschlossenen Schützen oder Schaltelementen der Hochvoltbatterie direkt mit dem Pluspol der Hochvoltbatterie verbunden. Hierdurch fließt ein Nullstrom ungleich null in die Elektromaschine, der von der Ansteuerschaltung geregelt wird.

In einer Ausführungsform ist die Ansteuerschaltung derart ausgebildet, die Soll-Spannung am Zwischenkreiskondensator in Abhängigkeit eines Arbeitspunktes anzupassen, sodass beispielsweise im Volllastbetrieb länger höhere Drehzahlen zur Verfügung gestellt werden können.

In einer weiteren Ausführungsform weist die Ansteuerschaltung eine dqz-Regelung sowie eine inverse dqz-Transformation auf. Hierdurch wird eine üblicherweise verwendete dq-Regelung um eine z-Regelung erweitert. Diese dqz-Regelung stellt dann die d-, q- und z-Werte zur Verfügung, um ein gefordertes Antriebsmoment zur Verfügung zu stellen sowie den Zwischenkreiskondensator nachzuladen, wobei dann durch die inverse dqz-Transformation diese Werte in Werte zur Ansteuerung der Schaltelemente des Wechselrichters für die mindestens drei Phasen umgerechnet werden.

In einer weiteren Ausführungsform ist die Ansteuerschaltung derart ausgebildet, mittels einer Leistungsvorsteuerung und eines Spannungsreglers für die Zwischenkreisspannung einen Soll-Nullstrom zu ermitteln. Durch die Leistungsvorsteuerung kann schneller auf eine Änderung eines zukünftig benötigten Nullstroms reagiert werden. Es sind aber auch Ausführungen möglich, wo auf die Leistungsvorsteuerung verzichtet wird.

In einer weiteren Ausführungsform ist die Ansteuerschaltung derart ausgebildet, dass ein Soll-Längsstrom und ein Soll-Querstrom mittels eines Kennfeldes ermittelt werden, wobei mindestens ein Drehmoment und ein magnetischer Fluss als Eingangsgröße verwendet werden.

In einer weiteren Ausführungsform weist die Ansteuerschaltung eine Spannungsvorsteuerung auf, wobei die Ansteuerschaltung derart ausgebildet ist, dass die Ausgangswerte der Spannungsvorsteuerung den Ausgangswerten eines Stromreglers für den Nullstrom aufaddiert werden. Die Spannungsvorsteuerung vergleicht dabei, die aktuellen Werte für die Spannung an der Hochvoltbatterie und dem Zwischenkreiskondensator. Dabei ist im normalen Betrieb die Spannung am Zwischenkreiskondensator größer als die Spannung an der Hochvoltbatterie, sodass ein Quotient aus U_{B}/U_{T} zwischen 1 und 0 liegt. Dabei wird im Regelfall versucht, den Quotienten auf einem bestimmten Wert (z.B. 0,4 - 0,6) zu halten. Ist der Quotient also zu groß, muss mehr Nullstrom aus der Hochvoltbatterie abgefordert werden, um den Quotienten zu erniedrigen.

In einer weiteren Ausführungsform weist das Traktionsnetz Mittel zur Erfassung oder Ermittlung von Phasenströmen der Elektromaschine auf, wobei die Ansteuerschaltung eine dqz-Transformation aufweist. Hierdurch können die Phasenströme in Längs-, Quer- und Nullstrom umgerechnet werden.

In einer weiteren Ausführungsform weist die Ansteuerschaltung eine Einheit auf, die derart ausgebildet ist, die Ansteuersignale für die Leistungstransistoren des Wechselrichters zu erzeugen.

In einer weiteren Ausführungsform ist in der positiven Hochvoltleitung eine zusätzliche Drossel angeordnet, um den Batteriestrom zu glätten.

Das Verfahren zum Betreiben eines zuvor beschriebenen Traktionsnetzes weist den Verfahrensschritt auf, dass die Ansteuerschaltung die Spannung am Zwischenkreiskondensator regelt. Hinsichtlich der weiteren Ausgestaltungen wird vollinhaltlich auf die vorangegangenen Ausführungen Bezug genommen.

Die Erfindung wird nachfolgend anhand eines bevorzugten Ausführungsbeispiels näher erläutert. Die Figuren zeigen:
- Fig. 1: ein schematisches Blockschaltbild eines Traktionsnetzes und
- Fig. 2: ein schematisches Blockschaltbild einer Ansteuerschaltung.

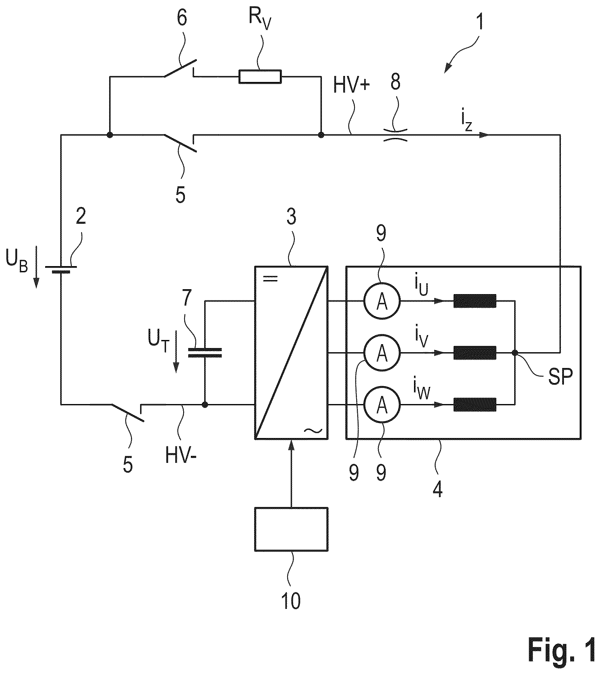

In der Fig. 1 ist ein schematisches Blockschaltbild eines Traktionsnetzes 1 eines Elektrofahrzeugs dargestellt. Das Traktionsnetz 1 weist eine Hochvoltbatterie 2, einen Wechselrichter 3 und eine Elektromaschine 4 auf. Die Hochvoltbatterie 2 ist über Schaltelemente 5, die vorzugsweise als Schütze ausgebildet sind, vom übrigen Traktionsnetz 1 trennbar, wobei prinzipiell ein Schaltelement 5 ausreichend ist. Parallel zu dem oberen Schaltelement 5, das einer positiven Hochvoltleitung HV+ zugeordnet ist, ist ein weiteres Schaltelement 6 mit einem Vorladewiderstand R_{V} angeordnet. Weiter ist parallel zu einem Gleichspannungseingang des Wechselrichters 3 ein Zwischenkreiskondensator 7 angeordnet. Eine negative Hochvoltleitung HV- ist direkt mit dem Zwischenkreiskondensator 7 und einem negativen Eingang des Wechselrichters verbunden. Die positive Hochvoltleitung HV+ ist über eine weitere Drossel 8 direkt mit einem Sternpunkt SP der Elektromaschine 4 verbunden. Die Elektromaschine 4 ist eine mindestens dreiphasige Elektromaschine 4, die beispielsweise als permanent oder fremderregte Synchronmaschine ausgebildet ist. Dabei sind Strommessrichtungen 9 vorgesehen, um die mindestens drei Phasenströme i_{U}, i_{V} und i_{W} in den Phasen der Elektromaschine 4 zu erfassen. Dem Wechselrichter 3 ist eine Ansteuerschaltung 10 zugeordnet, die später noch näher erläutert wird. Der Wechselrichter 3 weist Schaltelemente mit Freilaufdioden auf, die beispielsweise eine klassische B6-Brückenschaltung ausbilden. Die Schaltelemente können als MOSFET oder IGBTs ausgebildet sein, wobei bei den MOSFETs deren intrinsische Body-Diode als Freilaufdiode genutzt werden kann, wohingegen bei IGBTs die Freilaufdiode als separates Bauelement parallel zum IGBT geschaltet werden muss.

Das Grundprinzip soll nun erläutert werden, wobei als Ausgangspunkt davon ausgegangen wird, dass die Schaltelemente 5, 6 offen sind und der Zwischenkreiskondensator 7 entladen ist, die Spannung U_{T} am Zwischenkreiskondensator 7 also null ist. Wird dann das Schaltelement 6 geschlossen, so fließt ein Batteriestrom i_{Z} (entspricht dem Nullstrom) über den Vorladewiderstand R_{V}, die Drossel 8 in den Sternpunkt SP, wo dieser sich gleichmäßig auf die drei Phasen aufteilt und im Wechselrichter über die Freilaufdioden in den Zwischenkreiskondensator 7 fließt und diesen beginnt aufzuladen. Steigt dann die Spannung U_{T} über einen vorbestimmten Wert, können die Schaltelemente 5 geschlossen werden und das Schaltelement 6 geöffnet werden. Unter Vernachlässigung der ohmschen Widerstände und der Durchlassspannungen der Freilaufdioden liegt am Ende die Batteriespannung U_{B} am Zwischenkreiskondensator 7 an. Dabei sei angemerkt, dass, wenn die Induktivitäten der Elektromaschine 4 und der Drossel 8 ausreichend groß sind, die Vorladeschaltung mit dem Schaltelement 6 und dem Vorladewiderstand R_{V} auch entfallen kann.

Anschließend werden die Schaltelemente (also die Leistungstransistoren wie MOSFETs oder IGBTs) des Wechselrichters derart angesteuert, dass diese als Hochsetzsteller arbeiten und die Spannung U_{T} am Zwischenkreiskondensator 7 auf eine Spannung größer der Batteriespannung U_{B} hochsetzen. Beispielsweise ist die Batteriespannung U_{B} = 400 V und die Spannung U_{T} am Zwischenkreiskondensator 7 800 V. Die Spannung am Zwischenkreiskondensator 7 kann dabei frei gewählt werden, wobei durch das Hochsetzen auch Spannungseinbrüche aufgrund eines sinkenden SOCs der Hochvoltbatterie 2 ausgeglichen werden können.

Anschließend wird beispielsweise im motorischen Betrieb die Energie für die Elektromaschine 4 vom Zwischenkreiskondensator 7 geliefert, wobei durch den Nullstrom i_{Z} der Zwischenkreiskondensator 7 nachgeladen wird, wobei dieser Vorgang parallel erfolgt und durch die Ansteuerschaltung 10 realisiert wird. Anschaulich wird die klassische dq-Regelung für den Antrieb (oder den Rekuperationsbetrieb) durch eine z-Regelung ergänzt, die den Zwischenkreiskondensator 7 im motorischen Betrieb nachlädt bzw. im Rekuperationsbetrieb die Hochvoltbatterie 2 lädt.

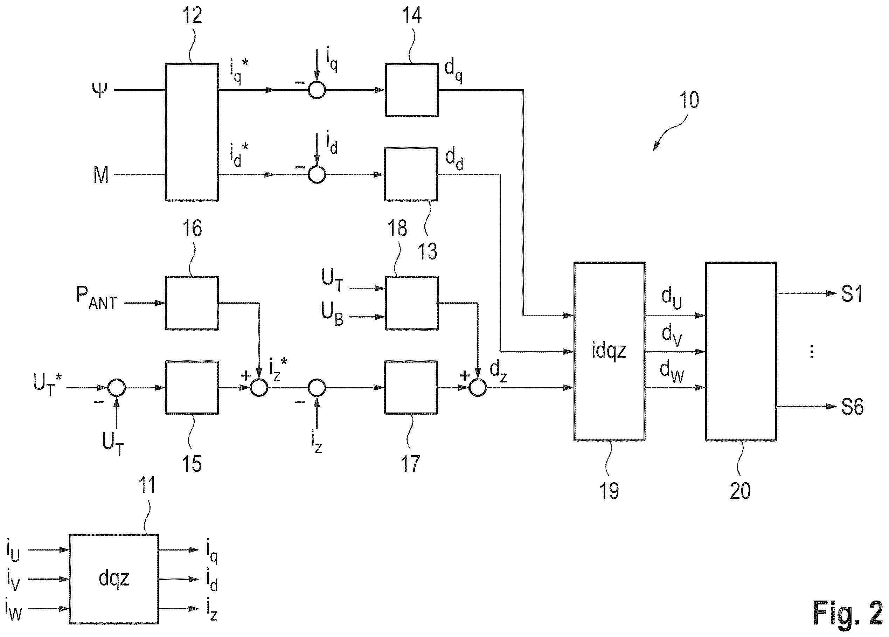

Dies soll nun anhand der Fig. 2 näher erläutert werden. Die Ansteuerschaltung 10 weist eine dqz-Transformation 11 auf, die die drei gemessenen Ist-Phasenströme i_{U}, i_{V} und i_{W} in einen Ist-Längsstrom i_{d}, einen Ist-Querstrom i_{q} und in einen Ist-Nullstrom i_{z} umrechnet. Weiter weist die Ansteuerschaltung 10 ein Kennfeld 12 auf, mittels dessen aus einem vorgegebenen Drehmoment M für die Elektromaschine 4 und einen magnetischen Fluss ψ ein Soll-Längsstrom i_{d}* und ein Soll-Querstrom i_{q}* ermittelt wird. Die Vorgaben für das Drehmoment M und den magnetischen Fluss ψ kommen beispielsweise von einem nicht dargestellten Motorsteuergerät. Ein Längsstromregler 13 und ein Querstromregler 14 regeln dann die Differenz zwischen Soll- und Ist-Strom aus, wobei an den Ausgängen der Regler 13, 14 Werte für einen duty-cycle d_{d} und d_{q} anliegen.

Der Soll-Nullstrom i_{Z}* wird durch zwei Komponenten der Ansteuerschaltung 10 ermittelt, nämlich einem Spannungsregler 15 und einer Leistungsvorsteuerung 16. Der Spannungsregler 15 regelt dabei eine Spannungsdifferenz zwischen einer Soll-Spannung U_{T}* und einer Ist-Spannung U_{T} am Zwischenkreiskondensator 7 aus. Auf diesen Wert wird ein Ausgangswert der Leistungsvorsteuerung 16 aufaddiert, d.h. dass beispielsweise im Vorgriff auf ein angefordertes Antriebsmoment (beispielsweise auch vom Motorsteuergerät geliefert) ein zusätzlicher Anteil für den Soll-Nullstrom i_{Z}* bereitgestellt wird, sodass Spannungseinbrüche am Zwischenkreiskondensator 7 verhindert werden. Über einen Nullstromregler 17 wird dann die Stromdifferenz ausgeregelt, wobei auf den Ausgangswert des Nullstromreglers 17 noch ein Ausgangswert einer Spannungsvorsteuerung 18 aufaddiert wird. Über die Spannungsvorsteuerung 18 wird dabei insbesondere der Ladezustand der Hochvoltbatterie 2 berücksichtigt. Als Ergebnis liegt dann ein duty-cycle für den Nullstrom d_{z} vor, der dann zusammen mit den duty-cyclen für den Längs- und Querstrom d_{d}, d_{q} einer inversen dqz-Transformation 19 zugeführt wird. Die inverse dqz-Transformation 19 ermittelt dann die dutycycles d_{U}, d_{V}, d_{W} für die Phasen der Elektromaschine 4.

Eine Einheit 20 setzt diese dann in die Ansteuersignale für die Leistungshalbleiter des Wechselrichters 3 um, beispielsweise in Ansteuersignale S1-S6 für eine B6-Brückenschaltung. Durch diese Ansteuerung wird zeitgleich ein Antriebsmoment erzeugt und der Zwischenkreiskondensator 7 nachgeladen (bzw. im Rekuperationsbetrieb die Hochvoltbatterie 2 geladen). Bei der inversen dqz-Transformation 19 kann zusätzlich noch der Rotorwinkel der Elektromaschine 4 als Eingangsgröße eingehen.

### Bezugszeichenliste

- 1: Traktionsnetz
- 2: Hochvoltbatterie
- 3: Wechselrichter
- 4: Elektromaschine
- 5: Schaltelement
- 6: Schaltelement
- 7: Zwischenkreiskondensator
- 8: Drossel
- 9: Strommessrichtung
- 10: Ansteuerschaltung
- 11: dqz-Transformation
- 12: Kennfeld
- 13: Regler
- 14: Regler
- 15: Spannungsregler
- 16: Leistungsvorsteuerung
- 17: Nullstromregler
- 18: Spannungsvorsteuerung
- 19: dqz-Transformation
- 20: Einheit
- d_{d}: duty-cycle für den Längsstrom
- d_{q}: duty-cycle für den Querstrom
- d_{z}: duty-cycle für den Nullstrom
- d_{U}, d_{V}, d_{W}: duty-cycle für die Phasen der Elektromaschine
- HV+: positive Hochvoltleitung
- HV-: negative Hochvoltleitung
- M: Drehmoment
- i_{d}: Ist-Längsstrom
- i_{q}: Ist-Querstrom
- i_{z}: Ist-Nullstrom
- i_{d}*: Soll-Längsstrom
- i_{q}*: Soll-Querstrom
- i_{z}*: Soll-Nullstrom
- i_{M}, i_{V}, i_{W}: Phasenströme
- R_{V}: Vorladewiderstand
- S1-S6: Ansteuersignale
- SP: Sternpunkt
- U_{B}: Batteriespannung
- U_{T}: Ist-Spannung
- U_{T}*: Soll-Spannung
- Ψ: magnetischer Fluss

## Patentansprüche

1. Traktionsnetz (1), wobei das Traktionsnetz (1) eine Hochvoltbatterie (2), einen Wechselrichter (3), eine mindestens dreiphasige Elektromaschine (4), mindestens einen Zwischenkreiskondensator (7) und eine Ansteuerschaltung (10) für den Wechselrichter (3) aufweist, wobei der mindestens eine Zwischenkreiskondensator (7) parallel zu einem Gleichspannungseingang des Wechselrichters (3) geschaltet ist, wobei die Elektromaschine (4) einen Sternpunkt (SP) aufweist, wobei der Wechselrichter (3) Schaltelemente mit Freilaufdioden aufweist,
**dadurch gekennzeichnet, dass**
eine positive Hochvoltleitung (HV+) mit dem Sternpunkt (SP) der Elektromaschine (4) verbunden ist, wobei die Ansteuerschaltung (10) derart ausgebildet ist, den Wechselrichter (3) als Hochsetzsteller anzusteuern.

2. Traktionsnetz nach Anspruch 1, **dadurch gekennzeichnet, dass** die Ansteuerschaltung (10) derart ausgebildet ist, die Soll-Spannung (U_{T}*) am Zwischenkreiskondensator (7) in Abhängigkeit eines Arbeitspunktes anzupassen.

3. Traktionsnetz nach Anspruch 1 oder 2, **dadurch gekennzeichnet, dass** die Ansteuerschaltung (10) eine dqz-Regelung sowie eine inverse dqz-Transformation (19) aufweist.

4. Traktionsnetz nach Anspruch 3, **dadurch gekennzeichnet, dass** die Ansteuerschaltung (10) derart ausgebildet ist, mittels einer Leistungsvorsteuerung (16) und eines Spannungsreglers (15) für die Zwischenkreisspannung einen Soll-Nullstrom (i_{Z}*) zu ermitteln.

5. Traktionsnetz nach einem der Ansprüche 3 oder 4, **dadurch gekennzeichnet, dass** die Ansteuerschaltung (10) derart ausgebildet ist, dass ein Soll-Längsstrom (i_{d}*) und ein Soll-Querstrom (i_{q}*) mittels eines Kennfeldes (12) ermittelt werden, wobei mindestens ein Drehmoment (M) und ein magnetischer Fluss (ψ) als Eingangsgröße verwendet werden.

6. Traktionsnetz nach einem der Ansprüche 3 bis 5, **dadurch gekennzeichnet, dass** die Ansteuerschaltung (10) eine Spannungsvorsteuerung (18) aufweist, wobei die Ansteuerschaltung (10) derart ausgebildet ist, dass die Ausgangswerte der Spannungsvorsteuerung (18) den Ausgangswerten eines Stromreglers (17) für den Nullstrom (i_{z}) aufaddiert werden.

7. Traktionsnetz nach einem der vorangegangenen Ansprüche, **dadurch gekennzeichnet, dass** das Traktionsnetz (1) Mittel (9) zur Erfassung oder Ermittlung von Phasenströmen (i_{U}, i_{V}, i_{W}) aufweist, wobei die Ansteuerschaltung (10) eine dqz-Transformation (11) aufweist.

8. Traktionsnetz nach einem der vorangegangenen Ansprüche, **dadurch gekennzeichnet, dass** die Ansteuerschaltung (10 eine Einheit (20) aufweist, die derart ausgebildet ist, die Ansteuersignale (S1-S6) für die Leistungstransistoren des Wechselrichters (3) zu erzeugen.

9. Traktionsnetz nach einem der vorangegangenen Ansprüche, **dadurch gekennzeichnet, dass** in der positiven Hochvoltleitung (HV+) eine zusätzliche Drossel (8) angeordnet ist.

10. Verfahren zum Betreiben eines Traktionsnetzes (1) nach einem der vorangegangenen Ansprüche, **dadurch gekennzeichnet, dass** die Ansteuerschaltung (10) die Spannung am Zwischenkreiskondensator (7) regelt.
